(19) Europäisches Patentamt
European Patent Office
Office européen des brevets

(11) **EP 2 748 434 B1**

(12) **EUROPÄISCHE PATENTSCHRIFT**

(45) Veröffentlichungstag und Bekanntmachung des Hinweises auf die Patenterteilung:
**02.08.2017   Patentblatt 2017/31**

(21) Anmeldenummer: **12769068.3**

(22) Anmeldetag: **24.09.2012**

(51) Int Cl.:
**F01K 3/12** *(2006.01)*

(86) Internationale Anmeldenummer:
**PCT/EP2012/068758**

(87) Internationale Veröffentlichungsnummer:
**WO 2013/045388 (04.04.2013 Gazette 2013/14)**

(54) **ANLAGE ZUR SPEICHERUNG THERMISCHER ENERGIE**

ASSEMBLY FOR STORING THERMAL ENERGY

INSTALLATION DE STOCKAGE D'ÉNERGIE THERMIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.09.2011   EP 11183273**

(43) Veröffentlichungstag der Anmeldung:
**02.07.2014   Patentblatt 2014/27**

(73) Patentinhaber: **Siemens Aktiengesellschaft 80333 München (DE)**

(72) Erfinder:
• **REZNIK, Daniel**
  **13503 Berlin (DE)**
• **STIESDAL, Henrik**
  **DK-5000 Odense C (DK)**

(56) Entgegenhaltungen:
**WO-A1-2007/029680      WO-A2-2010/006942
US-A1- 2009 126 381**

**Beschreibung**

Die Erfindung betrifft eine Anlage zur Speicherung thermischer Energie, die einen Ladekreislauf für ein Arbeitsgas aufweist, d. h., dass in dem Ladekreislauf ein Arbeitsgas zum Einsatz kommt. In dem Ladekreislauf sind folgende Einheiten in der angegebenen Reihenfolge durch eine erste Leitung für das Arbeitsgas miteinander verbunden: eine erste thermische Fluidenergie-Maschine, ein Wärmespeicher und eine zweite thermische Fluidenergie-Maschine. In Durchflussrichtung des Arbeitsgases von der ersten thermischen Fluidenergie-Maschine zur zweiten thermischen Fluidenergie-Maschine gesehen ist die erste thermische Fluidenergie-Maschine als Arbeitsmaschine und die zweite thermische Fluidenergie-Maschine als Kraftmaschine geschaltet.

Die Begriffe Kraftmaschine und Arbeitsmaschine werden im Rahmen dieser Anmeldung so verwendet, dass eine Arbeitsmaschine mechanische Arbeit aufnimmt, um ihren Zweck zu erfüllen. Eine thermische Fluidenergie-Maschine, die als Arbeitsmaschine verwendet wird, wird somit als Verdichter oder als Kompressor betrieben. Demgegenüber verrichtet eine Kraftmaschine Arbeit, wobei eine thermische Fluidenergie-Maschine zur Verrichtung der Arbeit die im Arbeitsgas zur Verfügung stehende thermische Energie umwandelt. In diesem Fall wird die thermische Fluidenergie-Maschine also als Motor betrieben.

Der Begriff "thermische Fluidenergie-Maschine" bildet einen Oberbegriff für Maschinen, die einem Arbeitsfluid, im Zusammenhang mit dieser Anmeldung ein Arbeitsgas, thermische Energie entziehen oder diesem thermische Energie zuführen können. Unter thermischer Energie ist sowohl Wärmeenergie als auch Kälteenergie zu verstehen. Thermische Fluidenergie-Maschinen (im folgenden auch kürzer als Fluidenergie-Maschinen bezeichnet) können beispielsweise als Kolbenmaschinen ausgeführt sein. Bevorzugt können auch hydrodynamische thermische Fluidenergie-Maschinen verwendet werden, deren Laufräder einen kontinuierlichen Fluss des Arbeitsgases erlauben. Vorzugsweise kommen axial wirkende Turbinen bzw. Verdichter zum Einsatz.

Das eingangs angegebene Prinzip ist beispielsweise gemäß der US 2010/0257862 A1 beschrieben. Hier kommen Kolbenmaschinen zum Einsatz, um das oben beschriebene Verfahren durchzuführen. Gemäß der US 5,436,508 ist es überdies bekannt, dass mittels der eingangs angegebenen Anlagen zur Speicherung thermischer Energie auch Überkapazitäten bei der Nutzung von Windenergie zur Herstellung elektrischen Stroms zwischengespeichert werden können, um diese im Bedarfsfall wieder abzurufen.

Gemäß der WO 2010/006942 A2 ist eine Anlage zur Speicherung von thermischer Energie beschrieben, bei der ein getrennter Ladekreislauf und Entladekreislauf vorgesehen sind. Der Ladekreislauf besteht aus einer Wärmepumpenanordnung mit zwei Wärmetauschern und einer Fluidenergiemaschine in Form einer Turbine sowie einem Drosselventil. Der Entladekreislauf ist als Dampfturbinenkreislauf mit zwei Wärmetauschern, einer Dampfturbine und einer Speisepumpe realisiert.

Die Aufgabe der Erfindung besteht darin, eine Anlage zur Speicherung von thermischer Energie der eingangs angegebenen Art (beispielsweise Wandlung von mechanischer in thermische Energie mit anschließender Speicherung oder Wandlung der gespeicherten thermischen Energie in mechanische Energie) anzugeben, mit der ein hoher Wirkungsgrad bei gleichzeitig vertretbarem Aufwand der verwendeten Baueinheiten möglich ist.

Diese Aufgabe wird mit der eingangs angegebenen Anlage zur Speicherung thermischer Energie erfindungsgemäß dadurch gelöst, dass der besagte Wärmespeicher über eine zweite Leitung auch in einen Entladekreislauf für Dampf als Arbeitsmedium geschaltet werden kann, wobei in dem Entladekreislauf folgende Einheiten in der angegebenen Reihenfolge durch die zweite Leitung miteinander verbunden sind: eine Pumpe, der Wärmespeicher und eine als Kraftmaschine geschaltete dritte thermische Fluidenergie-Maschine, bei der es sich insbesondere um eine Dampfturbine handeln kann, und wobei der Wärmespeicher eine Länge aufweist, welche durch den Dampf der Länge nach durchlaufen wird. Die Pumpe kommt als vierte thermische Fluidenergie-Maschine zum Einsatz, wobei zu bemerken ist, dass diese flüssiges Wasser fördert. Dieses wird in dem Wärmespeicher verdampft und kann auf diesem Wege die Dampfturbine antreiben. Hierdurch wird vorteilhaft das Laden bzw. das Entladen von thermischer Energie in die Anlage bzw. aus der Anlage möglich. Der Entladekreislauf führt Dampf und unterscheidet sich hierbei nicht von gebräuchlichen Dampfkreisläufen konventioneller Kraftwerke. Allerdings gelingt die Lösung der Aufgabe dadurch, dass ein solcher Dampfkreislauf über den thermischen Speicher mit einem Ladekreislauf der eingangs angegebenen Art kombiniert wird und auf diese Weise der Dampfkreislauf als Entladekreislauf für den thermischen Speicher verwendet werden kann. Vorteilhaft können durch die Verwendung von Dampf als Arbeitsmedium im Entladekreislauf höhere Energiedichten erzielt werden, weswegen vergleichsweise kleine und kostengünstige Komponenten zum Einsatz kommen können. Hierdurch lässt sich ein hoher Wirkungsgrad erzielen und der Materialaufwand der verwendeten Baueinheiten und somit deren Anschaffungskosten senken.

Normalerweise ist ein Dampfkreislauf der beschriebenen Art geschlossen. Zwischen der dritten Fluidenergie-Maschine und der Pumpe befindet sich dann im geschlossenen Kreislauf ein Kondensator, der dem Arbeitsmedium nach Passieren der Dampfturbine Wärme entzieht und auf diese Weise verflüssigt. Prinzipiell ist es allerdings auch denkbar, dass der Kreislauf offen ausgeführt ist. Die Pumpe muss dann mit Speisewasser aus der Umgebung gespeist werden, während das Arbeitsmedium nach Passieren der dritten Fluidenergie-Maschine wieder in die Umgebung ausgeblasen wird.

Gemäß einer Ausgestaltung der Erfindung ist vorgesehen, dass der Wärmespeicher im Ladekreislauf und im Entladekreislauf in entgegengesetzter Richtung durchströmt wird. Dies wird erreicht durch eine geeignete Verschaltung des Wärmespeichers mit dem Ladekreislauf bzw. mit dem Entladekreislauf, indem dieser jeweils in die erste Leitung oder die zweite Leitung geschaltet wird. Eine entgegengesetzte Durchströmungsrichtung beim Laden und Entladen des Wärmespeichers hat den Vorteil, dass sich die Warm-Kalt-Front beim Laden und Entladen jeweils in entgegengesetzter Richtung bewegt. Hierdurch kann zwischen den Betriebszuständen Laden und Entladen jederzeit hin- und hergeschaltet werden, ohne dass abgewartet werden muss, dass der Wärmespeicher vollständig geladen oder entladen ist.

Gemäß einer anderen Ausgestaltung der Erfindung ist vorgesehen, dass der Wärmespeicher ein mit der ersten Leitung verbundenes erstes Kanalsystem und ein mit der zweiten Leitung verbundenes, unabhängiges zweites Kanalsystem aufweist. Dies hat den Vorteil, dass die Kanalsysteme jeweils optimal auf die herrschenden Betriebszustände hin ausgelegt werden können. Hierbei ist zu bemerken, dass der Entladekreislauf, bei dem Dampf, insbesondere Wasserdampf, verwendet wird, vorteilhaft beispielsweise bei einem Druck von 100 bar betrieben wird. Der Ladekreislauf, der vorteilhaft mit handelsüblichen hydrodynamischen Verdichtern betrieben werden soll, würde in diesem Fall auf einen Druck von lediglich 15 bar ausgelegt werden müssen. Damit können die Wände des ersten Kanalsystems mit einer geringeren Wandstärke ausgelegt werden, als die Wände des zweiten Kanalsystems. Bevorzugt werden die Kanalsysteme durch parallel verlaufende Rohre in einem Wärmespeichermedium, wie beispielsweise Beton, ausgeführt. Eine Alternative zu unabhängigen Kanalsystemen wäre die Schaltung von Ventilen, um das durch den Wärmespeicher zur Verfügung gestellte einzige Kanalsystem abwechselnd in die erste Leitung oder in die zweite Leitung zu schalten. Allerdings müsste bei einem Betriebswechsel von Entladen zu Laden eine Trocknung des Kanalsystems erfolgen, wodurch Zeit verloren geht. Dieser Trockenschritt kann vorteilhaft eingespart werden, wenn unabhängige Kanalsysteme für den Ladekreislauf und den Entladekreislauf verwendet werden.

Auch das Material der Rohre kann bei Vorliegen von zwei Kanalsystemen unterschiedlich gewählt werden. Statt unterschiedlicher Wandstärken kann beispielsweise für das zweite Kanalsystem ein stabilerer Werkstoff gewählt werden. Auch kann berücksichtigt werden, dass in den Kanalsystemen unterschiedliche Korrosionsbedingungen vorliegen.

Außerdem ist es vorteilhaft möglich, wenn ein erstes Kanalsystem und ein zweites Kanalsystem vorliegt, dass das Laden und Entladen des Wärmespeichers gleichzeitig erfolgt. Dieser Betriebszustand kann vorteilhaft beispielsweise dann genutzt werden, wenn ein Ladebetrieb im Augenblick wegen eines Überschusses an erzeugter Windenergie noch sinnvoll ist, aber beispielsweise nach Auswertung des Wetterberichtes absehbar ist, dass kurzfristig keine Windenergie mehr zur Verfügung stehen wird und andererseits der Bedarf an elektrischer Energie nicht mehr gedeckt werden kann. Da der Entladekreislauf einen gewissen Vorlauf benötigt, bevor elektrische Energie gewonnen werden kann, wird dieser bereits hochgefahren, obwohl der Ladevorgang im Augenblick noch fortgesetzt werden kann. Danach kann bei Auftreten des erwarteten Energiemangels sofort durch Entladen des Wärmespeichers elektrische Energie zur Verfügung gestellt werden.

Vorteilhaft ist es, wenn das Verhältnis des Volumens des ersten Kanalsystems zum Volumen des zweiten Kanalsystems ungefähr umgekehrt proportional zum Verhältnis der spezifischen Enthalpie-Zunahme im ersten Kanalsystem während des Ladebetriebs zur spezifischen Enthalpie-Zunahme Druck im zweiten Kanalsystem während des Entladebetriebes ist. Mit "ungefähr" im Zusammenhang mit dieser Erfindung ist gemeint, dass bei der umgekehrten Proportionalität eine Abweichung von bis zu 25 % bevorzugt von bis zu 10 % zugelassen sein soll, um im Sinne der Erfindung noch im zulässigen Proportionalitätsbereich zu liegen.

Gemäß einer besonders vorteilhaften Ausgestaltung der Erfindung kann bei Verwendung von zwei Kanalsystemen vorgesehen werden, dass das erste Kanalsystem und das zweite Kanalsystem durch parallel verlaufende Rohre gebildet werden, wobei jedes zum ersten Kanalsystem gehörende Rohr zumindest zu einem Rohr des zweiten Kanalsystems benachbart verläuft. Mit anderen Worten werden die Rohre der beiden Kanalsysteme derart im Wärmetauscher angeordnet, dass sich trotz einer höheren Anzahl von Rohren des ersten Kanalsystems immer ein Rohr des zweiten Kanalsystems in der Nähe jedes Rohres des ersten Kanalsystems befindet. Hierdurch wird vorteilhaft sichergestellt, dass sowohl beim Laden wie auch beim Entladen des Wärmespeichers eine homogene Erwärmung desselben über seine rechtwinkelig zum Verlauf der Rohre zur Verfügung stehende Querschnittsfläche erreicht werden kann. Auf diese Weise kann vorteilhaft die Wärmekapazität des Speichermediums im Wärmespeicher optimal ausgenutzt werden.

Weiterhin ist es vorteilhaft, wenn die dritte thermische Fluidenergie-Maschine zweistufig aus einer Hochdruckturbine und einer Niederdruckturbine aufgebaut ist. Dieses Wirkprinzip für Turbinen ist bei der Gewinnung von mechanischer (elektrischer) Energie aus Dampf bereits hinlänglich bekannt. Der Dampf kann dann zweistufig entspannt werden. Hierdurch lässt sich ein größerer Energiegehalt aus dem Dampf in mechanische Energie umwandeln. Hierdurch steigt vorteilhaft der Wirkungsgrad der Anlage als Ganzes.

Außerdem erlaubt die zweistufige Entspannung des Dampfes, dass eine erste verschließbare Bypassleitung parallel zur Hochdruckturbine in der zweiten Leitung geschaltet werden kann. Hierdurch kann ein weiterer Vorteil bei der erfindungsgemäßen Anlage dadurch erreicht werden, dass die in dem Wärmespeicher gespeicherte Wärme besser ausgenutzt werden kann. Ein Betrieb der Hochdruckturbine ist nämlich nur so lange mit befriedigendem Wirkungsgrad möglich, wie die Temperatur im Wärmespeicher dazu ausreicht, den Wasserdampf zu überhitzen und so den zum Betrieb der Hochdruckturbine erforderlichen Druck aufzubauen. Ist die Temperatur im Wärmespeicher so weit abgesunken, dass dieser Druck nicht mehr aufgebaut werden kann, so genügt die Temperatur immer noch zum Betrieb der Niederdruckturbine. Um den Wirkungsgrad in diesem Betriebszustand zu verbessern, kann dann die Bypassleitung geöffnet werden, so dass die Hochdruckturbine umgangen wird. Damit kann der Wärmespeicher bei noch befriedigendem Wirkungsgrad der Gewinnung mechanischer Energie weiter entladen werden.

Eine besondere Ausgestaltung der Erfindung sieht vor, dass ein Kältespeicher in Durchflussrichtung des Ladekreislaufes gesehen hinter der zweiten thermischen Fluidenergie-Maschine in die erste Leitung geschaltet werden kann. Hierbei ist zu berücksichtigen, dass das Arbeitsgas nach dem Verlassen der zweiten Fluidenergie-Maschine Temperaturen weiter unter dem Gefrierpunkt aufweist. Hierdurch wird Kälteenergie zur Verfügung gestellt, die erfindungsgemäß in dem Kältespeicher gespeichert wird. Hier kann sie beispielsweise zum Betrieb eines Kühlhauses verwendet werden, so dass der mit der Kühlung des Kühlhauses ansonsten anfallende Energieaufwand eingespart werden kann. Dies verbessert insgesamt die Bilanz der Anlage. Eine andere Möglichkeit besteht darin, dass der Kältespeicher in Durchflussrichtung des Entladekreislaufes gesehen auch hinter der dritten thermischen Fluidenergie-Maschine in die zweite Leitung geschaltet werden kann. Dies kann - wie bereits erläutert - durch ein vom Ladekreislauf unabhängiges Kanalsystem im Kältespeicher erfolgen. Der Kältespeicher dient dann der Kondensation des Dampfes und kann hierbei sehr effektiv arbeiten. Insbesondere kann die Durchlaufstrecke des Dampfes/des flüssigen Arbeitsmediums im Vergleich zu gewöhnlichen Kondensatoren verkürzt werden, da ein höheres Temperaturgefälle zur Verfügung steht. Der damit verbundene geringere Strömungswiderstand im Kältespeicher (der als Kondensator eingesetzt wird) verbessert den Gesamtwirkungsgrad der Anlage.

Vorteilhaft ist es bei der thermischen Aufladung des Wärmespeichers und des Kältespeichers, wenn vor der ersten Fluidenergie-Maschine der Zusatz-Wärmespeicher vom Arbeitsgas durchflossen wird. Das heißt, dass das Arbeitsgas durch den Zusatz-Wärmespeichers aufgewärmt in die erste Fluidenergie-Maschine eingespeist wird. Die Verwendung des Zusatz-Wärmespeichers hat folgende Vorteile. Wird die Anlage zur Speicherung der thermischen Energie verwendet, so wird der Zusatz-Wärmespeicher vor Passieren der in diesem Fall als Arbeitsmaschine (Verdichter) arbeitenden ersten/dritten Fluidenergie-Maschine durchlaufen. Hierdurch wird das Arbeitsgas bereits über Umgebungstemperatur aufgewärmt. Dies hat den Vorteil, dass die Arbeitsmaschine eine geringere Leistung aufnehmen muss, um die geforderte Temperatur des Arbeitsgases zu erreichen. Konkret soll der Wärmespeicher auf über 500°C aufgewärmt werden, was vorteilhaft anschließend an das Vorwärmen des Arbeitsgases auch mit handelsüblichen thermodynamischen Verdichtern erfolgen kann, die eine Verdichtung des Arbeitsgases auf 15 bar erlauben. Vorteilhaft kann daher auf Komponenten für die Baueinheiten der Anlage zurückgegriffen werden, die am Markt ohne kostspielige Modifikationen erhältlich sind. Vorteilhaft kann das Arbeitsgas in dem Zusatz-Wärmespeicher auf eine Temperatur zwischen 60°C und 100°C, besonders vorteilhaft auf eine Temperatur von 80°C erwärmt werden. Wie bereits erwähnt, kann das Arbeitsgas im Ladekreislauf des Wärmespeichers und Kältespeichers auf 15 bar verdichtet werden, wodurch sich Temperaturen des Arbeitsgrades von bis zu 550°C erreichen lassen.

Gemäß einer besonders vorteilhaften Ausgestaltung der Erfindung kann auch vorgesehen werden, dass der Zusatzwärmespeicher in Durchflussrichtung des Entladekreislaufes gesehen auch vor dem Wärmespeicher in die zweite Leitung geschaltet werden kann. Hierdurch kann sichergestellt werden, dass das Wasser bzw. der Dampf in dem Zusatzwärmespeicher bereits vorgewärmt wird, so dass die im heißeren Wärmespeicher gespeicherte Wärme länger einer Überhitzung des Dampfes zur Verfügung steht. Daher kann die Anlage vorteilhaft möglichst lange bei dem geforderten Druck und der geforderten Temperatur für einen optimalen Wirkungsgrad betrieben werden.

Besonders vorteilhaft ist es, wenn eine zweite verschließbare Bypassleitung in der zweiten Leitung parallel zum Wärmespeicher geschaltet ist. Hierdurch wird es möglich, in Betriebszuständen, in denen der Wärmespeicher nicht genügend aufgeladen ist, den Zusatz-Wärmespeicher allein zu verwenden. Die im Zusatzwärmespeicher vorhandene Temperatur reicht in diesem Fall aus, um die Niederdruckturbine einer zweistufig ausgebildeten dritten Fluidenergie-Maschine allein zu betreiben und auf diesem Wege mechanische Leistung bei befriedigendem Wirkungsgrad abzugeben.

Der Zusatz-Wärmespeicher kann alternativ auch von externen Wärme- und Kältequellen gespeist werden. Hierbei bietet sich beispielsweise Fernwärme aus einem Kraftwerk an. Besonders vorteilhaft ist es jedoch, wenn der Zusatzwärmespeicher auch durch einen Wärmepumpen-Prozesse aufgeladen wird. Hierfür kann vorteilhaft der Zusatz-Wärmespeicher über eine Zusatzleitung zwischen eine fünfte thermische Fluidenergie-Maschine und eine sechste thermische Fluidenergie-Maschine geschaltet werden, wobei in Durchflussrichtung des Arbeitsgases von der fünften thermischen Fluidenergie-Maschine zur sechsten thermischen Fluidenergie-Maschine gesehen die fünfte thermische Fluidenergie-Maschine als Arbeitsmaschine und die sechste thermische Fluidenergie-Maschine als Kraftmaschine geschaltet ist. Es steht somit vorteilhaft für die Aufladung des Zusatz-Wärmespeichers ein gesonderter Wärmepumpenkreislauf (Zusatzkreislauf) zur Verfügung, wobei die fünfte und sechste Fluidenergie-Maschine für die in dem Zusatz-Wärmespeicher zu erzeugenden Temperaturen optimiert werden können. Natürlich kann der Zusatz-Wärmespeicher auch durch die erste oder durch die dritte Fluidenergie-Maschine aufgeladen werden, wenn eine geeignete Verschaltung über Leitungen bzw. Bypassleitungen ermöglicht wird. Abzuwägen ist hierbei immer der Aufwand an Komponenten gegenüber der Steigerung des Wirkungsgrades für die Einzelprozesse. Bei dieser Abwägung stehen wirtschaftliche Überlegungen im Vordergrund.

Das Arbeitsgas kann wahlweise in einem geschlossenen oder einem offenen Ladekreislauf oder Zusatzkreislauf geführt werden. Ein offener Kreislauf verwendet als Arbeitsgas immer die Umgebungsluft. Diese wird aus der Umgebung angesaugt und am Ende des Prozesses auch wieder in diese entlassen, so dass die Umgebung den offenen Kreislauf schließt. Ein geschlossener Kreislauf erlaubt auch die Verwendung eines anderen Arbeitsgases als Umgebungsluft. Dieses Arbeitsgas wird in dem geschlossenen Kreislauf geführt. Da eine Entspannung in die Umgebung bei gleichzeitiger Einstellung des Umgebungsdruckes und der Umgebungstemperatur entfällt, muss das Arbeitsgas im Falle eines geschlossenen Kreislaufes durch einen Wärmetauscher geführt werden, der eine Abgabe von Wärme des Arbeitsgases an die Umgebung erlaubt.

Es kann zum Beispiel vorgesehen werden, dass der Ladekreislauf für die Speicherung der thermischen Energie in dem Kältespeicher und/oder dem Wärmespeicher als offener Kreislauf ausgebildet ist und die dort als Kraftmaschine arbeitende zweite thermische Fluidenergie-Maschine aus zwei Stufen aufgebaut ist, wobei zwischen den Stufen ein Wasserabscheider für das Arbeitsgas vorgesehen ist. Hierbei wird dem Umstand Rechnung getragen, dass in der Umgebungsluft Luftfeuchtigkeit enthalten ist. Durch eine Entspannung des Arbeitsgases in einer einzigen Stufe kann es dazu kommen, dass die Luftfeuchtigkeit aufgrund der starken Abkühlung des Arbeitsgases auf beispielsweise -100°C kondensiert und hierbei die thermische Fluidenergie-Maschine beschädigt. Insbesondere können Turbinenschaufeln durch Vereisung nachhaltig beschädigt werden. Eine Entspannung des Arbeitsgases in zwei Schritten ermöglicht es jedoch, kondensiertes Wasser in einem Wasserabscheider hinter der ersten Stufe beispielsweise bei 5°C abzuscheiden, so dass dieses bei einer weiteren Abkühlung des Arbeitsgases in der zweiten Turbinenstufe bereits entfeuchtet ist und eine Eisbildung verhindert oder zumindest verringert werden kann. Vorteilhaft wird das Risiko einer Beschädigung der zweiten Fluidenergie-Maschine hiermit verringert.

Wird ein geschlossener Kreislauf verwendet, muss ein Wärmetauscher vor der ersten bzw. dritten Fluidenergie-Maschine, bei Verwendung eines Zusatz-Wärmespeichers vor diesem in den Kreislauf eingebaut werden, um das Arbeitsgas auf Umgebungstemperatur zu erwärmen. Dann kann die Verwendung eines Wasserabscheiders sowie einer zweistufigen Fluidenergie-Maschine als Kraftmaschine entfallen. Als Arbeitsgas kann in diesem Fall beispielsweise auch entfeuchtete Umgebungsluft verwendet werden, deren Befeuchtung durch die Geschlossenheit des Kreislaufes ausgeschlossen ist. Aber auch andere Arbeitsgase können Verwendung finden.

Weitere Einzelheiten der Erfindung werden nachfolgend anhand der Zeichnung beschrieben. Gleiche oder sich entsprechende Zeichnungselemente sind hierbei jeweils mit denselben Bezugszeichen versehen und werden nur insoweit mehrfach erläutert, wie sich Unterschiede zwischen den einzelnen Figuren ergeben. Es zeigen:

Figur 1 und 2    ein Ausführungsbeispiel der erfindungsgemäßen Anlage in den Betriebszuständen eines Aufladens (Figur 1) und Entladens (Figur 2) jeweils als Blockschaltbilder,

Figur 3    den Temperaturverlauf T des Dampfes im Wärmespeicher 14 abhängig vom im Wärmespeicher zurückgelegten Weg x als grafische Darstellung und

Figur 4 und 5    schematisch im Querschnitt Möglichkeiten einer Anordnung von Rohren im Wärmespeicher, Zusatzwärmespeicher und Kältespeicher.

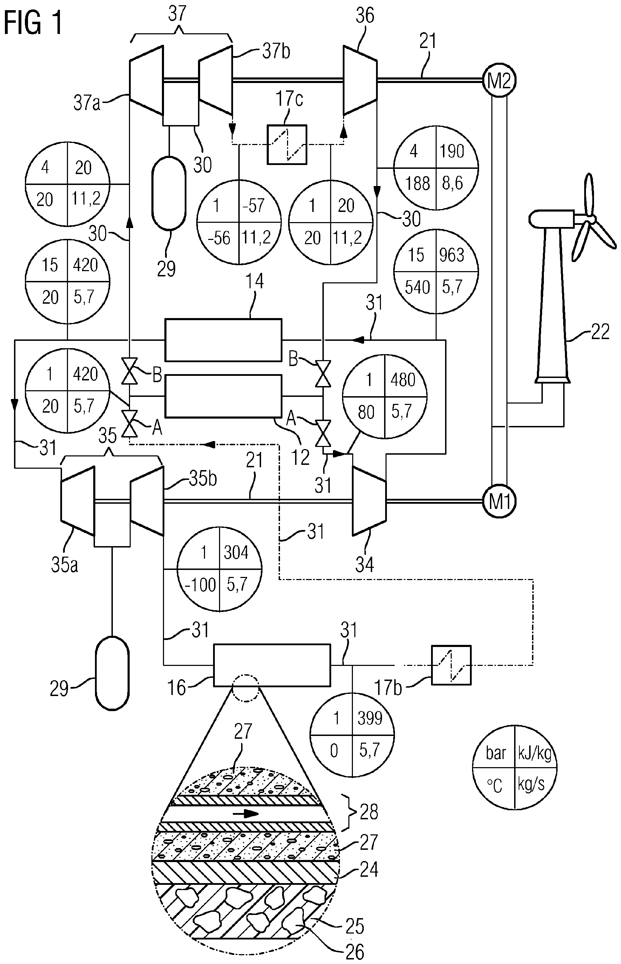

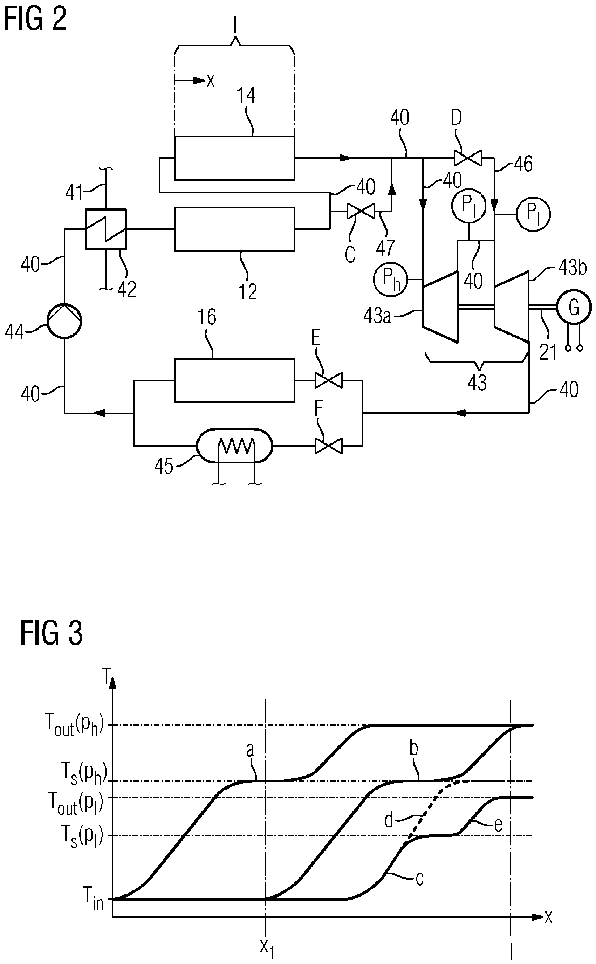

Anhand einer Anlage gemäß den Figuren 1 und 2 sollen der thermische Auflade- und Entladeprozess von thermischen Speichern 12, 14, 16 näher erläutert werden. In Figur 1 ist zunächst ein zweistufiger Ladeprozess dargestellt, der nach dem Prinzip einer Wärmepumpe funktioniert. Dargestellt ist ein offener Ladekreislauf, der jedoch, wie strichpunktiert angedeutet, unter Einsatz eines optional vorgesehenen Wärmetauschers 17b geschlossen werden könnte. Die Zustände im Arbeitsgas, welche bei dem Ausführungsbeispiel der Figuren 2 und 3 aus Luft besteht, sind jeweils an den Leitungen 30, 31, 32 in Kreisen dargestellt. Links oben ist der Druck in bar angegeben. Rechts oben wird die Entalpie in KJ/Kg angegeben. Links unten steht die Temperatur in °C und rechts unten wird der Massefluss in Kg/s angegeben. Die Flussrichtung des Gases ist durch Pfeile in der betreffenden Leitung angedeutet (Diese Kreise werden auch in Figur 2 verwendet).

In der Modellrechnung für den Ladekreislauf der ersten Leitung 31 gemäß Figur 1 gelangt das Arbeitsgas mit 1 bar und 20°C in einen (vorher aufgeladenen) Zusatz-Wärmespeicher 12 und verlässt diesen mit einer Temperatur von 80°C. Durch Komprimierung mittels der als Verdichter arbeitenden ersten Fluidenergie-Maschine 34 kommt es zu einer Druckerhöhung auf 15 bar und infolgedessen auch zu einer Temperaturerhöhung auf 540°C. Dieser Berechnung liegt folgende Formel zugrunde

$$T_2 = T_1 + (T_{2s} - T_1)/\eta_c; \quad T_{2s} = T_1 \pi^{(K-1)/K},$$

wobei

$T_2$ die Temperatur am Verdichterausgang,
$T_1$ die Temperatur am Verdichtereingang,
$\eta_c$ der isentropische Wirkungsgrad des Kompressors,
n das Druckverhältnis (hier 15:1) und
K die Kompressibilität ist, die bei Luft 1,4 beträgt.

Der isentropische Wirkungsgrad $\eta_c$ kann einem Kompressor mit 0,85 vorausgesetzt werden.

Das erhitzte Arbeitsgas durchläuft nun den Wärmespeicher 14, wo der Hauptteil der verfügbaren thermischen Energie gespeichert wird. Während der Speicherung kühlt sich das Arbeitsgas auf 20°C ab, während der Druck mit 15 bar erhalten bleibt. Anschließend wird das Arbeitsgas in zwei in Serie geschalteten Stufen 35a, 35b einer zweiten Fluidenergie-Maschine 35 entspannt, so dass es auf einem Druckniveau von 1 bar anlangt. Dabei kühlt sich das Arbeitsgas nach der ersten Stufe auf 5°C und nach der zweiten Stufe auf -100°C ab. Grundlage für diese Berechnung ist ebenfalls die oben angegebene Formel.

In den Teil der Leitung 31, der die beiden Stufen der vierten Fluidenergie-Maschine 35a, 35b in Form einer Hochdruckturbine und einer Niederdruckturbine verbindet, ist zusätzlich ein Wasserabscheider 29 vorgesehen. Dieser ermöglicht nach einer ersten Entspannung eine Trocknung der Luft, so dass die in dieser enthaltene Luftfeuchtigkeit in der zweiten Stufe 35b der vierten Fluidenergie-Maschine 35 nicht zu einer Vereisung der Turbinenblätter führt.

Im weiteren Verlauf entzieht das entspannte und daher abgekühlte Arbeitsgas dem Kältespeicher 16 Wärme und wird dadurch auf 0°C erwärmt. Auf diesem Weg wird Kälteenergie im Kältespeicher 16 gespeichert, die bei einer anschließenden Energiegewinnung genutzt werden kann. Vergleicht man die Temperatur des Arbeitsgases am Ausgang des Kältespeichers 16 und am Eingang des Zusatz-Wärmespeichers 12, so wird deutlich, warum für den Fall eines geschlossenen Ladekreislaufs der Wärmetauscher 17b zur Verfügung gestellt werden muss. Hier kann das Arbeitsgas wieder auf Umgebungstemperatur von 20°C aufgewärmt werden, wodurch der Umgebung Wärme entzogen wird, die dem Prozess zur Verfügung gestellt wird. Eine solche Maßnahme kann selbstverständlich entfallen, wenn das Arbeitsgas direkt aus der Umgebung angesaugt wird, da dies bereits Umgebungstemperatur aufweist.

Damit bei dem Durchlaufen des Ladekreislaufes der ersten Leitung 31 eine Vorerwärmung durch den Zusatz-Wärmespeicher 12 erfolgen kann, ist ein Zusatzkreislauf durch eine Zusatzleitung 30 verwirklicht, mit dem der Zusatz-Wärmespeicher 12 aufgeladen werden kann. Der Zusatz-Wärmespeicher 12 muss daher sowohl an den Ladekreislauf der ersten Leitung 31 als auch an den Zusatzkreislauf der Zusatzleitung 30 angeschlossen werden können. Ein Anschluss an die erste Leitung 31 erfolgt durch die Ventile A, während ein Anschluss an die Zusatzleitung 30 durch Öffnen der Ventile B gewährleistet wird. Beim Durchlaufen der Zusatzleitung 30 wird die Luft zunächst durch eine fünfte Fluidenergie-Maschine 36 geleitet, die als Verdichter arbeitet. Die verdichtete Luft wird durch den Zusatz-Wärmespeicher 12 geleitet, wobei die Durchflussrichtung entsprechend der angedeuteten Pfeile genau entgegengesetzt zum durch die erste Leitung 31 gebildeten Ladekreislauf verläuft. Nachdem die Luft von Umgebungsdruck (1 bar) und Umgebungstemperatur (20°C) durch den Verdichter auf 4 bar und einer Temperatur von 188°C gebracht wurde, wird die Luft durch den Zusatz-Wärmespeicher 12 wieder auf 20°C abgekühlt. Anschließend wird die Luft durch die Stufen 37a, 37b einer sechsten Fluidenergie-Maschine 37, die als Turbine arbeitet, in zwei Stufen entspannt. Auch hier ist in der die beiden Stufen 37a, 37b verbindenden Zusatzleitung 30 ein Wasserabscheider 29 vorgesehen, der genauso funktioniert, wie der in der zweiten Leitung 31 befindliche. Nach Entspannen der Luft über die sechste Fluidenergie-Maschine 37 besitzt diese eine Temperatur von -56°C bei Umgebungsdruck (1 bar). Für den Fall, dass der Zusatzkreislauf der Zusatzleitung 30, wie strichpunktiert dargestellt, geschlossen ausgeführt sein soll, muss daher ein Wärmetauscher 17c vorgesehen werden, damit die Luft von -56°C durch Wärmeabgabe an die Umgebung auf 20°C aufgewärmt werden kann.

Die Kreisläufe der zweiten Leitung 31 und der Zusatzleitung 30 werden unabhängig voneinander in Gang gesetzt. Daher sind die dritte und vierte Fluidenergie-Maschine über die Welle 21 mit einem Motor M1 und die fünfte und sechste Fluidenergie-Maschine über die andere Welle 21 mit einem Motor M2 mechanisch gekoppelt. Bei Überkapazitäten der Windkraftanlage 22 kann die elektrische Energie zunächst den Motor M2 antreiben, um den Zusatz-Wärmespeicher 12 aufzuladen. Anschließend können durch Betrieb des Motors M1 und gleichzeitiger Entladung des Zusatzwärmespeichers 12 der Wärmespeicher 14 und der Kältespeicher 16 aufgeladen werden. Anschließend kann durch den Betrieb des Motors M2 auch der Zusatz-Wärmespeicher 12 wieder aufgeladen werden. Wenn alle Speicher voll aufgeladen sind, kann ein effektiver Entladezyklus zur Gewinnung elektrischer Energie eingeleitet werden (vgl. Figur 2). Sollte die Überkapazität des Windkraftwerks 22 jedoch enden, ohne dass der Zusatz-Wärmespeicher 12 aufgeladen werden konnte, so kann die in diesem zur Verfügung gestellte Energie auch durch eine andere Wärmequelle 41 ersetzt werden, oder es wird nur der Wärmespeicher 14 eingesetzt (vgl. Figur 2).

Vorstellbar ist auch ein Zusatz-Wärmespeicher 12, der durch getrennte Leitungssysteme für die erste Leitung 31 und die Zusatzleitung 30 versorgt werden kann. Hierdurch entstünden zwei unabhängige Kreisläufe, ohne dass Ventile I und K zum Einsatz kommen. Auf diese Weise könnte der Zusatz-Wärmespeicher 12 gleichzeitig geladen und entladen werden. Vorstellbar ist daher in diesem Fall auch ein gleichzeitiger Betrieb der Motoren M1, M2. Dieses Betriebsregime hat zwei Vorteile. Zum einen können auch größere Überkapazitäten des Windkraftwerks 22 durch gleichzeitigen Betrieb der Motoren M1, M2 bei Volllast aufgefangen werden, wodurch eine größere Flexibilität des Systems entsteht. Außerdem könnte durch gleichzeitiges Betreiben beider Motoren sichergestellt werden, dass die drei thermischen Speicher 12, 14, 16 immer gleichzeitig und nicht nacheinander aufgefüllt werden. Damit kann der Ladevorgang jederzeit bei voller Betriebsfähigkeit des Entladevorgangs gestoppt werden, wenn keine Überkapazitäten im elektrischen Netz mehr vorhanden sind und stattdessen ein Bedarf an zusätzlicher elektrischer Energie entsteht.

Gemäß Figur 2 wird die Anlage nun mit einem Entladekreislauf betrieben, der durch eine zweite Leitung 40 realisiert ist. Die Leitung 40 stellt einen geschlossenen Kreislauf dar. Wasser wird durch den Zusatzwärmespeicher 12, den Wärmespeicher 14 und optional durch eine weitere Wärmequelle 41, z. B. Fernwärme, über einen Wärmetauscher 42 verdampft und überhitzt und gelangt so über die Leitung 40 (Ventile C und D sind geschlossen) zu einer dritten thermischen Fluidenergie-Maschine 43. Diese ist zweistufig aufgebaut, bestehend aus einer Hochdruckturbine 43a und einer Niederdruckturbine 43b, die nacheinander durchlaufen werden. Die Fluidenergie-Maschine 43 treibt über eine weitere Welle 21 einen Generator G an. Dieser erzeugt im Bedarfsfall also Strom, während die thermischen Speicher 12, 14, 16 entladen werden.

Der Dampf verlässt die Niederdruckturbine 43b und wird über die Leitung 40 durch das geöffnete Ventil E durch den Kältespeicher 16 geführt, der hierdurch entladen wird. Dabei kondensiert der Dampf und wird durch die Leitung 40 einer Pumpe 44 (vierte Fluidenergie-Maschine) wieder den Wärmespeichern zugeführt, wodurch der Kreislauf geschlossen wird. Wenn der Kältespeicher 16 entleert ist, steht alternativ ein Wärmetauscher als Kondensator 45 zur Verfügung. Dieser kann nach den allgemein gängigen Wirkprinzipien arbeiten. Um den Kondensator 45 zu aktivieren, wird das Ventil E geschlossen und das Ventil F geöffnet.

Durch Betätigen der Ventile C und D kann in bestimmten Betriebszuständen kann der Wirkungsgrad der Anlage verbessert werden. Das Ventil D liegt in einer ersten Bypassleitung 46, mit der bei Öffnen des Ventils D die Hochdruckturbine 43a umgangen werden kann. Dieser Betriebszustand ist sinnvoll, wenn die Temperatur im Wärmespeicher 14 nicht mehr ausreicht, um durch Überhitzung des Wasserdampfes den Druck in der Leitung 40 auf die geforderte Höhe zu bringen. Letzteres kann durch eine Teilentladung bzw. eine noch nicht vollständige Aufladung des Wärmespeichers 14 bewirkt werden (hierzu im Folgenden mehr, siehe Figur 3).

Im äußersten Fall ist der Wärmespeicher 14 vollständig entleert, während der Zusatzwärmespeicher 12 bereits aufgeladen wurde. Dieser Zustand kann beispielsweise entstehen, wenn zusätzliche Energie durch das Windkraftwerk 22 erst seit kurzer Zeit zur Verfügung gestellt werden konnte, nun aber ein Überbedarf an elektrischer Energie gedeckt werden soll. In diesem Fall kann zusätzlich zum Ventil D auch das Ventil C einer zweiten Bypassleitung 47 geschaltet werden. In diesem Fall wird der Wärmespeicher 14 durch die Bypassleitung 47 umgangen, so dass der Zusatzwärmespeicher 12 über die Niederdruckturbine 43b entleert werden kann. Daher steht bereits thermische Energie in der Anlage zur Verfügung, die bei befriedigendem Wirkungsgrad durch den Generator G in elektrische Energie gewandelt werden kann. In diesem Fall ist auch der Kältespeicher 16 noch nicht aufgeladen, da dieser gemeinsam mit dem Wärmespeicher 14 aufgeladen wird. Für diesen Betriebszustand wird über das Ventil F somit der Kondensator 45 geschaltet.

Für das Verständnis der Figur 3 sind in Figur 2 einige physikalische Größen eingezeichnet. Die Hochdruckturbine wird mit Dampf eines Druckes $p_h$ versorgt. Für die Versorgung der Niederdruckturbine 43b genügt Dampf mit einem geringeren Druck von $p_1$. Dieser Druck besteht in der Verbindungsleitung 40 zwischen der Hochdruckturbine 43a und der Niederdruckturbine 43b oder bei bestimmten Betriebszuständen nach Öffnen des Ventils D auch in der Bypassleitung 46. Weiterhin weist der Wärmespeicher 14 eine Länge 1 auf, welche durch den zu erhitzenden Dampf der Länge nach entlang einer Laufvariablen x durchlaufen werden muss.

In Figur 3 ist diese Laufvariable x auf der x-Achse dargestellt. Der Temperaturbereich vom Durchlaufen des Wärmespeichers 14 über seine Länge 1 ist dargestellt, so dass die y-Achse die Temperatur des Dampfes T anzeigt. Zu erkennen ist zum einen die Temperatur $t_{in}$, mit der das Wasser in den Wär-mespeicher eintritt. Für den Betrieb der Hochdruckturbine 43a ist die Temperatur $t_{out}(p_h)$ gefordert, die ausreicht, um die geforderten Dampfparameter zu erzeugen. $T_s(p_h)$ zeigt diejenige Temperatur an, bei der das Wasser siedet und verdampft, wobei diese Temperatur gehalten wird, bis das Wasser vollständig verdampft ist. Dies wird durch ein waagerechtes Teilstück der Kurve a deutlich. Ist das gesamte Wasser verdampft, erfolgt aufgrund der höheren Temperatur im Wärmespeicher 14 eine Überhitzung des erzeugten Dampfes, wodurch die geforderten Dampfparameter in der Leitung 40 erreicht werden. Es ist anhand der Kurve a zu erkennen, dass bei einem vollständig gefüllten Wärmespeicher diese geforderte Temperatur bereits nach ca. 2/3 der Länge 1 erreicht wird und danach eine weitere Überhitzung des Dampfes nicht möglich ist, so dass diese Temperatur konstant bleibt.

Die Kurve b zeigt den Zustand, der erreicht wird, wenn die Kalt-Warm-Front im Wärmespeicher 14 bereits bis $x_1$ gewandert ist (dies erfolgt bei fortschreitender Entladung des Wärmespeichers 14). In diesem Fall verbleibt das Wasser bis $x_1$ bei der Temperatur $T_{in}$, wobei die restliche Wegstrecke $1-x_1$ gerade noch ausreicht, um die geforderte Temperatur $t_{out}(p_h)$ zu erreichen.

Würde nun die Hochdruckturbine 43a weiter mit Dampf versorgt werden, so würde dieser entsprechend der Kurve c und der gepunktet dargestellten Kurve d zwar noch verdampfen, jedoch nicht mehr überhitzt werden können, weil der Dampf vorher bereits durch Erreichen des Endes x=1 des Wärmespeichers 14 nicht mehr erwärmt werden könnte. Durch Öffnen des Ventils D und damit durch Umgehen der Hochdruckturbine 43a wird der Dampf jedoch nun direkt in die Niederdruckturbine 43b eingespeist. Hierdurch sinkt der Druck in der Bypassleitung 46 und die erforderliche Temperatur $t_{out}(p_1)$ sinkt ebenfalls. Daher nimmt der Temperaturverlauf nun den Weg von Kurve c und e, das heißt, dass das Wasser bereits bei $T_s(p_1)$ verdampft und die erforderliche Temperatur $t_{out}(p_1)$ noch rechtzeitig innerhalb des Wärmespeichers 14 erreicht wird.

Der Aufbau, des Wärmespeichers 14 und des Kältespeichers 16 und des Zusatz-Wärmespeichers bei der Anlage in Figur 1 und 2 ist jeweils gleich und wird durch eine Ausschnittsvergrößerung anhand des Kältespeichers 16 in Figur 1 näher dargestellt. Vorgesehen ist ein Behälter, dessen Wand 24 mit einem Isolationsmaterial 25 versehen ist, welches große Poren 26 aufweist. Im Inneren des Behälters ist Beton 27 vorgesehen, der als Wärmespeicher oder Kältespeicher fungiert. Innerhalb des Betons 27 sind Rohre 28 parallel verlaufend verlegt, durch die das Arbeitsgas strömt und dabei Wärme abgibt oder Wärme aufnimmt (je nach Betriebsart und Speicherart).

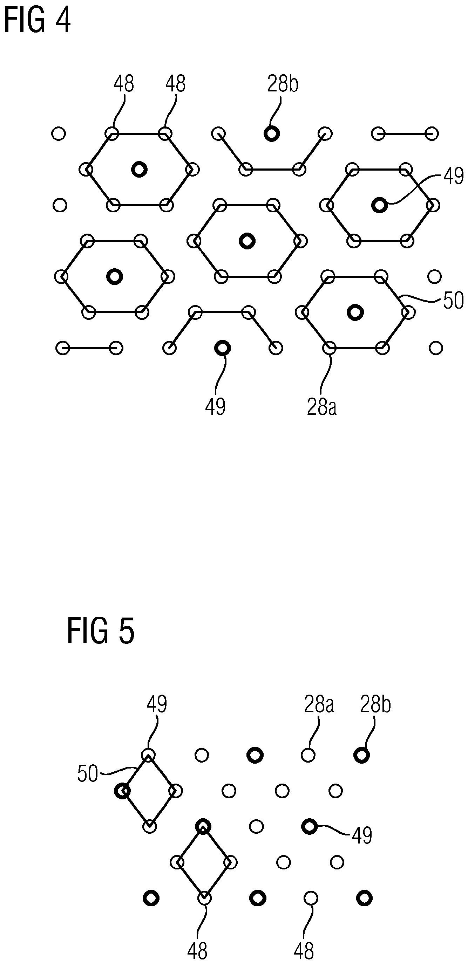

Gemäß Figur 4 und 5 ist jeweils ein Ausschnitt aus einem Querschnitt durch den Wärmespeicher 14, den Kältespeicher 16 und den Zusatz-Wärmespeicher 12 dargestellt, in dem die Rohre 28 im Querschnitt zu erkennen sind. Zu erkennen sind dünnwandige Rohre 28a und dickwandige Rohre 28b. Die dünnwandigen Rohre 28a bilden ein erstes Kanalsystem 48 und die dickwandigen Rohre 28b ein zweites Kanalsystem 49. Das Wärmespeichermedium 27 ist der Übersichtlichkeit halber nicht dargestellt. Weiterhin sind Hilfslinien 50 eingezeichnet, wobei diese keine reale Struktur des entsprechenden Speichers darstellen, sondern lediglich der Verdeutlichung der geometrischen Anordnung dienen.

Die dünnwandigen Rohre 28a, die das erste Kanalsystem 48 bilden, sind an das erste Leitungssystem 31 bzw. das Zusatzleitungssystem 30 angeschlossen. Hier herrschen geringere Drücke, was die dünneren Wände der Rohre 28a erklärt. Das zweite Kanalsystem 49, welches durch die dickwandigen Rohre 28b gebildet wird, ist an das zweite Leitungssystem 40 angeschlossen. Diese müssen den höheren Dampfdruck ertragen, weswegen sie dickwandiger ausgeführt sind. Es fällt auf, dass mehr dünnwandige Rohre 28 als dickwandige Rohre 28 vorgesehen sind. Hierdurch weist das Kanalsystem 48 einen größeren Querschnitt auf als das Kanalsystem 49. Wie durch die Hilfslinien zu erkennen ist, besteht gemäß Figur 4 bei der Anordnung der Rohre ein Verhältnis von dickwandigen Rohren 28b zu dünnwandigen Rohren 28a von 1:6 (in Figur 4) bzw. 1:5 (in Figur 5). Dennoch kann man den durch Hilfslinien 50 angedeuteten Elementarzellen entnehmen, dass jedem dünnwandigen Rohr 28a mindestens ein dickwandiges Rohr 28b benachbart ist. Hierdurch ergibt sich ein regelmäßiges Muster von Rohren, das insgesamt zu einer homogenen Erwärmung des Wärmespeichers führt.

## Patentansprüche

1. Anlage zur Speicherung thermischer Energie, die einen Ladekreislauf für ein Arbeitsgas aufweist, wobei in dem Ladekreislauf folgende Einheiten in der angegebenen Reihenfolge durch eine erste Leitung (31) für das Arbeitsgas miteinander verbunden sind:

   • eine erste thermische Fluidenergie-Maschine (34),
   • ein Wärmespeicher (14) und
   • eine zweite thermische Fluidenergie-Maschine (35),

   wobei in Durchflussrichtung des Arbeitsgases von der ersten thermischen Fluidenergie-Maschine (34) zur zweiten thermischen Fluidenergie-Maschine (35) gesehen die erste thermische Fluidenergie-Maschine (34) als Arbeitsmaschine und die zweite thermische Fluidenergie-Maschine (35) als Kraftmaschine geschaltet ist,
   wobei der besagte Wärmespeicher (14) über eine zweite Leitung (40) auch in einen Entladekreislauf für Dampf als Arbeitsmedium geschaltet werden kann,
   wobei in dem Entladekreislauf folgende Einheiten in der angegebenen Reihenfolge durch die zweite Leitung (40) miteinander verbunden sind:

   • eine Pumpe (44)
   • der Wärmespeicher (14) und
   • eine als Kraftmaschine geschaltete dritte thermische Fluidenergie-Maschine (43), insbesondere eine Dampfturbine,

   wobei der Wärmespeicher (14) eine Länge (1) aufweist, welche durch den Dampf der Länge (1) nach durchlaufen wird.

**2.** Anlage nach Anspruch 1,
**dadurch gekennzeichnet,**
**dass** der Wärmespeicher (14) im Ladekreislauf und im Entladekreislauf in entgegen gesetzter Richtung durchströmt wird.

**3.** Anlage nach Anspruch 1 oder 2,
**dadurch gekennzeichnet,**
**dass** der Wärmespeicher ein mit der ersten Leitung (31) verbundenes erstes Kanalsystem (48) und ein mit der zweiten Leitung verbundenes, unabhängiges zweites Kanalsystem (49) aufweist.

**4.** Anlage nach Anspruch 3,
**dadurch gekennzeichnet,**
**dass** das Verhältnis des Volumens des ersten Kanalsystems (48) zum Volumen des zweiten Kanalsystems (49) ungefähr umgekehrt proportional zum Verhältnis der Zunahme der spezifischen Enthalpie im ersten Kanalsystem (48) während des Ladebetriebes zur Zunahme der spezifischen Enthalpie im zweiten Kanalsystem (49) während des Entladebetriebes.

**5.** Anlage nach Anspruch 3,
**dadurch gekennzeichnet,**
**dass** das erste Kanalsystem (48) und das zweite Kanalsystem (49) durch parallel verlaufende Rohre (28) gebildet werden, wobei jedes zum ersten Kanalsystem (48) gehörende Rohr (28a) zu mindestens einem Rohr (28b) des zweiten Kanalsystems (49) benachbart verläuft.

**6.** Anlage nach einem der voranstehenden Ansprüche,
**dadurch gekennzeichnet,**
**dass** die dritte thermische Fluidenergie-Maschine (43) mindestens zweistufig aus einer Hochdruckturbine (43a) und einer Niederdruckturbine (43b) aufgebaut ist.

**7.** Anlage nach Anspruch 6,
**dadurch gekennzeichnet,**
**dass** eine erste verschließbare Bypassleitung (46) parallel zur Hochruckturbine (43a) in der zweiten Leitung (40) geschaltet ist.

**8.** Anlage nach einem der vorangehenden Ansprüche,
**dadurch gekennzeichnet,**
**dass** ein Kältespeicher (16) in Durchflussrichtung des Ladekreislaufes gesehen hinter der zweiten thermischen Fluidenergie-Maschine (35) in die erste Leitung (31) geschaltet werden kann.

**9.** Anlage nach Anspruch 8,
**dadurch gekennzeichnet,**
**dass** der Kältespeicher (16) in Durchflussrichtung des Entladekreislaufes gesehen auch hinter der dritten thermischen Fluidenergie-Maschine (43) in die zweite Leitung (40) geschaltet werden kann.

**10.** Anlage nach einem der voranstehenden Ansprüche,
**dadurch gekennzeichnet,**
**dass** ein Zusatz-Wärmespeicher (12) über eine Zusatzleitung (30) zwischen eine fünfte thermische Fluidenergie-Maschine (36) und eine sechste thermische Fluidenergie-Maschine (37) geschaltet werden kann, wobei in Durchflussrichtung des Arbeitsgases von der fünften thermischen Fluidenergie-Maschine (36) zur sechsten thermischen Fluidenergie-Maschine (37) gesehen die fünfte thermische Fluidenergie-Maschine (36) als Arbeitsmaschine und die sechste thermische Fluidenergie-Maschine (37) als Kraftmaschine geschaltet ist.

**11.** Anlage nach Anspruch 10,
**dadurch gekennzeichnet,**
**dass** der Zusatz-Wärmespeicher (12) in Durchflussrichtung des Ladekreislaufes gesehen auch vor der ersten thermischen Fluidenergie-Maschine (34) in die erste Leitung (31) geschaltet werden kann.

**12.** Anlage nach einem der Ansprüche 10 oder 11,
**dadurch gekennzeichnet,**
**dass** der Zusatz-Wärmespeicher (12) in Durchflussrichtung des Entladekreislaufes gesehen auch vor dem Wärmespeicher (14) in die zweite Leitung (40) geschaltet werden kann.

**13.** Anlage nach dem auf Anspruch 6 rückbezogenen Anspruch 12,
**dadurch gekennzeichnet,**
**dass** eine zweite verschließbare Bypassleitung (47) parallel zum Wärmespeicher (14) in der zweiten Leitung (40) geschaltet ist.

**Claims**

**1.** Installation for storing thermal energy, said installation having a charging circuit for a working gas, wherein, in the charging circuit, the following units are connected to one another in the stated sequence by a first line (31) for the working gas:

    • a first thermal fluid energy machine (34),
    • a heat accumulator (14) and
    • a second thermal fluid energy machine (35),

wherein, as viewed in the throughflow direction of the working gas from the first thermal fluid energy machine (34) to the second thermal fluid energy machine (35), the first thermal fluid energy machine (34) is connected as work machine and the second thermal fluid energy machine (35) is connected as prime mover,
wherein the stated heat accumulator (14) can also be connected, via a second line (40), into a discharging circuit for steam as working medium, wherein, in the discharging circuit, the following units are connected to one another in the stated sequence by the second line (40):

- a pump (44),
- the heat accumulator (14), and
- a third thermal fluid energy machine (43), in particular a steam turbine, connected as prime mover,

wherein the heat accumulator (14) has a length (1) that is traversed, along the length (1), by the steam.

2. Installation according to Claim 1, **characterized in that** the heat accumulator (14) is traversed by flow in opposite directions in the charging circuit and in the discharging circuit.

3. Installation according to Claim 1 or 2, **characterized in that** the heat accumulator has a first duct system (48) connected to the first line (31) and has an independent second duct system (49) connected to the second line.

4. Installation according to Claim 3, **characterized in that** the ratio of the volume of the first duct system (48) to the volume of the second duct system (49) is approximately inversely proportional to the ratio of the increase of the specific enthalpy in the first duct system (48) during the charging operation to the increase of the specific enthalpy in the second duct system (49) during the discharging operation.

5. Installation according to Claim 3, **characterized in that** the first duct system (48) and the second duct system (49) are formed by pipes (28) running parallel, wherein each pipe (28a) belonging to the first duct system (48) runs adjacent to at least one pipe (28b) of the second duct system (49) .

6. Installation according to one of the preceding claims, **characterized in that** the third thermal fluid energy machine (43) is of at least two-stage construction with a high-pressure turbine (43a) and a low-pressure turbine (43b).

7. Installation according to Claim 6, **characterized in that** a first closable bypass line (46) is connected in parallel with the high-pressure turbine (43a) in the second line (40).

8. Installation according to one of the preceding claims, **characterized in that** a cold accumulator (16) can be connected into the first line (31) downstream of the second thermal fluid energy machine (35) as viewed in the throughflow direction of the charging circuit.

9. Installation according to Claim 8, **characterized in that** the cold accumulator (16) can also be connected into the second line (40) downstream of the third thermal fluid energy machine (43) as viewed in the throughflow direction of the discharging circuit.

10. Installation according to one of the preceding claims, **characterized in that** an auxiliary heat accumulator (12) can be connected between a fifth thermal fluid energy machine (36) and a sixth thermal fluid energy machine (37) by means of an auxiliary line (30), wherein, as viewed in the throughflow direction of the working gas from the fifth thermal fluid energy machine (36) to the sixth thermal fluid energy machine (37), the fifth thermal fluid energy machine (36) is connected as work machine and the sixth thermal fluid energy machine (37) is connected as prime mover.

11. Installation according to Claim 10, **characterized in that** the auxiliary heat accumulator (12) can also be connected into the first line (31) upstream of the first thermal fluid energy machine (34) as viewed in the throughflow direction of the charging circuit.

12. Installation according to either of Claims 10 or 11, **characterized in that** the auxiliary heat accumulator (12) can also be connected into the second line (40) upstream of the heat accumulator (14) as viewed in the throughflow direction of the discharging circuit.

13. Installation according to Claim 12 where referred back to Claim 6, **characterized in that** a second closable bypass line (47) is connected into the second line (40) in parallel with respect to the heat accumulator (14).

**Revendications**

1. Installation d'accumulation d'énergie thermique, qui a un circuit de charge pour un gaz de travail, dans lequel, dans le circuit de charge, les unités suivantes sont reliées entre elles dans la succession indiquée par un premier conduit (31) pour le gaz de travail :

- une première machine (34) thermique à énergie de fluide,
- un accumulateur (14) de chaleur et
- une deuxième machine (35) thermique à énergie de fluide, dans laquelle, dans le sens de passage du gaz de travail considéré de la première machine (34) thermique à énergie de fluide à la deuxième machine (35) thermique à énergie de fluide, la première machine (34) thermique à énergie de fluide est montée en machine de travail et la deuxième machine (35) thermique à énergie de fluide en machine motrice,

dans laquelle l'accumulateur (14) de chaleur peut être monté aussi par un deuxième conduit (40) dans un circuit de décharge pour de la vapeur comme fluide de travail,

dans laquelle, dans le circuit de décharge, les groupes suivants sont reliés entre eux dans la succession indiquée par le deuxième conduit (40) :

- une pompe (44)
- l'accumulateur (14) de chaleur et
- une troisième machine (43) thermique à énergie de fluide montée en machine motrice, notamment une turbine à vapeur,

dans laquelle l'accumulateur (14) de chaleur a une longueur (1), qui est parcourue sur toute sa longueur (1) par la vapeur.

2. Installation suivant la revendication 1,
   **caractérisée**
   **en ce que** l'on passe dans l'accumulateur (14) de chaleur en sens contraire dans le circuit de charge et dans le circuit de décharge.

3. Installation suivant la revendication 1 ou 2,
   **caractérisée**
   **en ce que** l'accumulateur de chaleur a un premier système (48) de canalisation communiquant avec le premier conduit (31) et un deuxième système (49) de canalisation indépendant communiquant avec le deuxième conduit.

4. Installation suivant la revendication 3,
   **caractérisée**
   **en ce que** le rapport du volume du premier système (48) de canalisation au volume du deuxième système (49) de canalisation est à peu près inversement proportionnel au rapport de l'augmentation de l'enthalpie spécifique dans le premier système (48) de canalisation pendant le fonctionnement en charge à l'augmentation de l'enthalpie spécifique dans le deuxième système (49) de canalisation pendant le fonctionnement en décharge.

5. Installation suivant la revendication 3,

**caractérisée**
**en ce que** le premier système (48) de canalisation et le deuxième système (49) de canalisation sont formés par des tuyaux (28) s'étendant parallèlement, chaque tuyau (28a) appartenant au premier système (48) de canalisation s'étendant au voisinage d'au moins un tuyau (28b) du deuxième système (49) de canalisation.

6. Installation suivant l'une des revendications précédentes,
   **caractérisée**
   **en ce que** la troisième machine (43) thermique à énergie de fluide est constituée en au moins deux étages composés d'une turbine (43a) de haute pression et d'une turbine (43b) de basse pression.

7. Installation suivant la revendication 6,
   **caractérisée**
   **en ce qu'**un premier conduit (46) de dérivation pouvant être fermé est monté parallèlement à la turbine (43a) de haute pression dans le deuxième conduit (40).

8. Installation suivant l'une des revendications précédentes,
   **caractérisée**
   **en ce que** l'accumulateur (16) de froid peut être monté dans le premier conduit (31), considéré dans le sens de passage du circuit de charge, derrière la deuxième machine (35) thermique à énergie de fluide.

9. Installation suivant la revendication 8,
   **caractérisée**
   **en ce que** l'accumulateur (16) de froid peut être monté dans le deuxième conduit (40), considéré dans le sens de passage du circuit de décharge, également derrière la troisième machine (43) thermique à énergie de fluide.

10. Installation suivant l'une des revendications précédentes,
    **caractérisée**
    **en ce qu'**un accumulateur (12) de chaleur supplémentaire peut être monté par l'intermédiaire d'un conduit (30) supplémentaire, entre une cinquième machine (36) thermique à énergie de fluide et une sixième machine (37) thermique à énergie de fluide, dans laquelle considéré dans le sens de passage du gaz de travail de la cinquième machine (36) thermique à énergie de fluide à la sixième machine (37) thermique à énergie de fluide, la cinquième machine (36) thermique à énergie de fluide est montée en machine de travail à la sixième machine (37) thermique à énergie de fluide en machine motrice.

11. Installation suivant la revendication 10,

**caractérisée**

**en ce que** l'accumulateur (12) de chaleur supplémentaire peut être monté dans le premier conduit (31), considéré dans le sens de passage du circuit de charge, également avant la première machine (34) thermique à énergie de fluide.

12. Installation suivant l'une des revendications 10 ou 11,
**caractérisée**
**en ce que** l'accumulateur (12) de chaleur supplémentaire peut être monté dans le deuxième conduit (40), considéré dans le sens de passage du circuit de dé

charge, également avant l'accumulateur (14) de chaleur.

13. Installation suivant la revendication 12 rapportée à la revendication 6,
**caractérisée**
**en ce qu'**un deuxième conduit (47) de dérivation pouvant être fermé est monté parallèlement à l'accumulateur (14) de chaleur dans le deuxième conduit (40).

# FIG 1

# FIG 2

# FIG 3

FIG 4

FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20100257862 A1
- US 5436508 A
- WO 2010006942 A2